Europäisches Patentamt

European Patent Office

Office européen des brevets

(19)

(11) Veröffentlichungsnummer: **0 116 890**
**B1**

(12)

# EUROPÄISCHE PATENTSCHRIFT

(45) Veröffentlichungstag der Patentschrift:
**15.10.86**

(51) Int. Cl.⁴: **B 65 G 27/08**

(21) Anmeldenummer: **84101210.7**

(22) Anmeldetag: **07.02.84**

(54) **Schwingförderer mit Schwingungsisolation.**

(30) Priorität: **15.02.83  DE 3305166**

(43) Veröffentlichungstag der Anmeldung:
**29.08.84 Patentblatt 84/35**

(45) Bekanntmachung des Hinweises auf die Patenterteilung:
**15.10.86 Patentblatt 86/42**

(84) Benannte Vertragsstaaten:
**AT CH DE FR IT LI**

(56) Entgegenhaltungen:
**AT-B-346 654**
**DE-A-2 211 480**
**DE-A-2 852 859**
**GB-A-1 390 505**

(73) Patentinhaber: **ROBERT BOSCH GMBH, Postfach 50, D-7000 Stuttgart 1 (DE)**

(72) Erfinder: **Hütter, Odo, Dr., Hugo- Wolf- Weg 17, D-7312 Kirchheim/T. (DE)**
Erfinder: **Jung, Rainer, Weidenweg 10, D-7250 Leonberg (DE)**

## Beschreibung

Stand der Technik

Die Erfindung geht aus von einem Schwingförderer nach der Gattung des Hauptanspruchs. Ein derartiger Schwingförderer ist aus der GB-A-1 390 505 bekannt. Die Gegenmasse, die üblicherweise auch durch den massiven Gehäusekörper (Grundkörper) des Schwingförderers gebildet wird, ist sehr viel größer als die Nutzmasse. Das auf der Förderrinne der Nutzmasse liegende Werkstück wird bei der Vorhubbewegung in Förderrichtung mitgenommen, macht jedoch den Rückhub der Nutzmasse nicht mit. Nutzmasse und Gegenmasse schwingen notwendigerweise jeweils in die entgegengesetzte Richtung, so daß auch bei einer großen Gegenmasse vom Schwingförderer auf die Umgebung übertragene Störschwingungen unvermeidbar sind. Besonders unangenehm werden derartige Schwingungen dann empfunden, wenn der Aufstellgrund durch die Störschwingungen auch zu Schwingungen angeregt wird, oder möglicherweise sogar die Störschwingungen verstärkt. Dieses kann dann der Fall sein, wenn als Aufstellgrund ein Gehäuse einer weiteren, zur Fertigungsanlage gehörenden Vorrichtung dient. Derartige Störschwingungen können eine erhebliche Geräuschentwicklung bilden und stellen wohl eines der Hauptprobleme bei der Anwendung von Schwingförderern dar.

Bei dem bekannten Schwingförderer o. g. Patentschrift werden deshalb zwischen Gegenmasse und Aufstellgrund als Dämpfungseinrichtung Gummipuffer angeordnet, die hier in Art eines Luftreifens ausgebildet sind. Aber auch derartige Gummipuffer haben nur eine sehr begrenzte Dämpfungskapazität. Die Aufgabe der Erfindung besteht darin, daß aus Nutzmasse, Gegenmasse u. Schwingantrieb bestehende System als Ganzes gegenüber dem Aufstellgrund so abzustützen, daß insbesondere die in horizontaler Richtung auftretenden Schwingungen weitgehend isoliert und/oder gedämpft werden.

Vorteile der Erfindung

Der erfindungsgemäße Schwingförderer mit den kennzeichnenden Merkmalen des Hauptanspruchs hat demgegenüber den Vorteil, daß eine freie Schwingung von Nutz- und Gegenmasse möglich ist und außerdem, zumindest in horizontaler Bewegungsrichtung, eine nahezu vollständige Isolation der Schwingung des Systems "Nutz- und Gegenmasse" gegenüber dem Aufstellgrund erreicht werden kann. Die Aufstellung des Schwingförderers ist dadurch weitgehend frei von den Eigenschaften des Aufstellgrundes wählbar.

Aufgrund der Erfindung ist die dem Schwingförderer eingegebene Schwingung von Nutz- und Gegenmasse eindeutig vorbestimmbar, also errechenbar. Da auch der Aufstellgrund eine eigene Schwingungsmasse bildet, ist vermieden, daß ein wohl richtig berechneter Schwingförderer im Einsatz völlig andere Eigenschaften aufweist wie ursprünglich vorgesehen. Auch der Einsatz zusätzlich angekoppelter Federmassesysteme bringt nicht diese Dämpfungs- und Isolationsergebnisse wie der erfindungsgemäße Schwingförderer, bei dem zumindest in horizontaler Bewegungsrichtung eine nahezu vollständige Isolation der Schwingung des schwingenden Systems Nutz- und Gegenmasse gegenüber der Umgebung erzielt wird.

Mit den vorgeschlagenen Wälzlagerelementen wird außer der guten Schwingungsisolation eine genaue Positionierung des Förderschwingers in einem Fertigungssystem erzielt, in das er als Teil einer Baugruppe integriert ist.

Nach einer vorteilhaften Ausgestaltung der Erfindung bestehen Schalen, Laufbahnen und/oder Wälzteile aus elastischem Material, vorzugsweise aus Gummi. Um den Abrieb so gering wie möglich zu halten, muß dieses Material verhältnismäßig hart sein. Durch die Elastizität werden jedoch die Laufgeräusche stark vermindert und es wird die erhöhte Druckbeanspruchung an der Stelle der Laufrichtungsumkehr elastisch aufgefangen bzw. vertieft.

Nach einer zusätzlichen Ausgestaltung der Erfindung sind in einer Einheit mindestens zwei Wälzteile vorgesehen, zwischen denen die Laufbahn eine der anderen Laufbahn zugeneigte Erhebung aufweist. Auf diese Weise kann ein Dämpfungslager hohe Lasten aufnehmen. Um eine entsprechende Standstabilität zu bekommen, müssen mindestens drei Lager pro Schwingförderer vorhanden sein. Je nach Untergrund oder konstruktiver Gestaltung des Schwingförderers sind der Zahl zu verwendender Lagereinheiten Grenzen gesetzt.

## Zeichnung

Zwei Ausführungsbeispiele des Gegenstandes der Erfindung sind in der Zeichnung dargestellt und werden im folgenden näher beschrieben. Es zeigen: Figur 1 einen linearen Schwingförderer in der Seitenansicht als erstes Ausführungsbeispiel, Figur 2 ein Rollenlagerelement im Schnitt und vergrößertem Maßstab, Figur 3 einen rotatorischen Schwingförderer in perspektivischer Ansicht als zweites Ausführungsbeispiel und Figur 9 ein Lagerelement des zweiten Ausführungsbeispiels im Schnitt und in vergrößertem Maßstab.

## Beschreibung der Erfindungsbeispiele

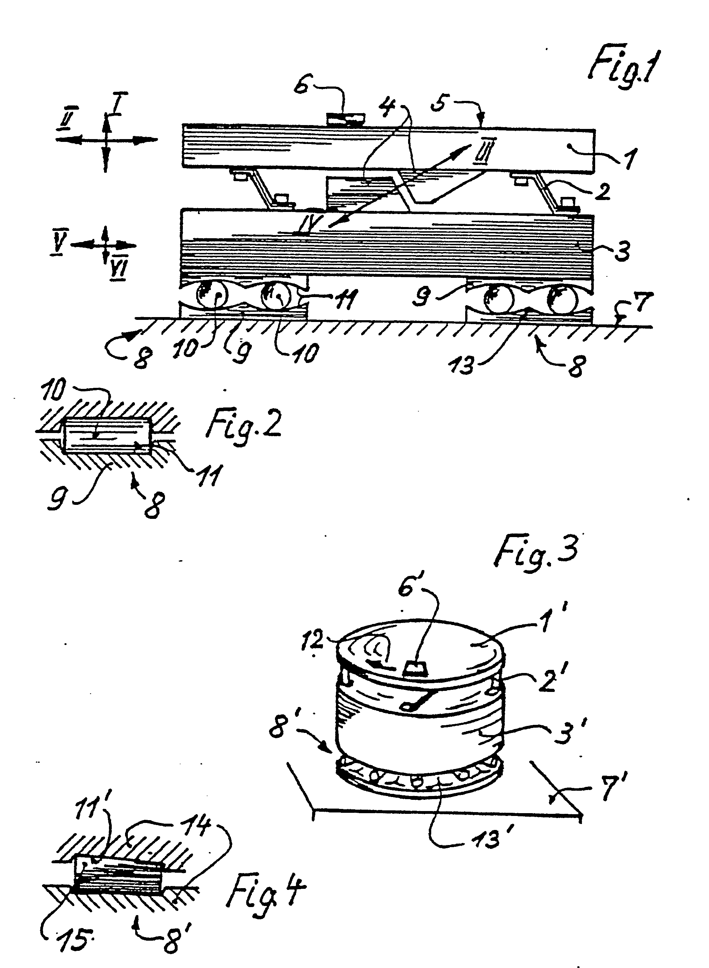

Bei dem in Figur 1 in der Seitenansicht dargestellten linearen Schwingförderer ist eine Nutzmasse 1 durch Blattfedern 2 an eine

Gegenmasse 3 gekoppelt. Zwischen Nutzmasse 1 und Gegenmasse 3 ist ein Schwingantrieb 4 vorgesehen, der beispielsweise ein Elektromagnetantrieb sein kann. Durch intermittierende Erregung dieses Antriebs 4 über ein nicht dargestelltes Steuergerät wird die Nutzmasse 1 durch die Blattfedern 2 zwangsgeführt in eine vertikale Bewegung I und eine horizontale Bewegung II versetzt. Während die nach links und unten gerichtete Bewegung durch Antrieb 4 bewirkt wird, wird die rückläufige Bewegung normalerweise über die Blattfedern erzeugt, die als Energiespeicher wirken. Auf der Nutzmasse 1 ist eine Förderfläche 5 vorgesehen, auf der ein Werkstück 6 befördert wird. Für die Förderrichtung ist die Schwingungsrichtung maßgebend, die durch die Pfeile III und IV dargestellt ist. Hierbei gibt der schräg nach oben zeigende Pfeil III auch die Richtung an, in die das Werkstück befördert wird.

Die Gegenmasse ist wesentlich schwerer als die Nutzmasse, so daß sich an der Gegenmasse wesentlich kleinere Auslenkungen einstellen (vergl. Pfeile V und VI). Das Verhältnis von Gegenmasse und Nutzmasse kann wie üblich etwa 10:1 betragen. Da es sich um ein Schwingungssystem mit kompensierenden Kräften handelt, sind die Schwingungen von Nutz- und Gegenmasse jeweils entgegengesetzt gerichtet.

Obwohl die Schwingungen der Gegenmasse wesentlich geringer als die der Nutzmasse sind, ist eine Übertragung dieser Restschwingungen als Störschwingungen auf den Aufstellgrund 7 unvermeidbar. Der Aufstellgrund 7 kann der massive Boden sein, es kann sich jedoch auch um eine konstruktive Vorrichtung handeln, mittels der der Schwingförderer in eine Fertigungsanlage integriert wird.

Um eine optimale Schwingungsdämpfung zwischen Gegenmasse und Aufstellgrund zu erhalten, sind erfindungsgemäß zwischen der Gegenmasse 3 und dem Aufstellgrund 7 Wälzlagereinheiten 8 angeordnet, welche aufgrund ihrer speziellen Gestaltung eine optimale Schwingungsisolation und Dämpfung bewirken. Zwischen 2 einander gegenüberliegenden Lagerschalen 9 sind jeweils 2 Wälzteile 10 angeordnet. Diese Wälzteile 10 können entweder Kugeln oder Rollen sein. Bevorzugt sind sie aus Gummi oder Kunststoff hergestellt, um eine zusätzliche Dämpfung zu erzielen. Auch die Lagerschalen 9 können aus Kunststoff oder Hartgummi bestehen. Die Laufbahnen 11 für die Wälzteile 10 in den Lagerschalen 9 erstrecken sich in Förderrichtung des Schwingförderers. Die Laufbahnen 11 nähern sich an den Enden der Lagerschalen 9 und bei 13 zwischen den Wälzteilen 10 entsprechend einer vorgegebenen Kurve, so daß während des schwingens die Wälzteile 10 beim an sich freien Abrollen auf den Laufbahnen 11 die Lagerschalen 9 auseinanderdrücken und dadurch die Gegenmasse 3 gegenüber dem Aufstellgrund 7 anheben. Hierdurch wird eine nahezu vollständige Isolation der auf den Aufstellgrund übertragenen Störschwingungen in horizontaler richtung erzielt.

Bei dem in Figur 1 dargestellten Ausführungsbeispiel weist jeweils eine Wälzlagereinheit zwei Wälzteile auf. Statt dessen können bei entsprechender Gestaltung der Lagerschalen auch mehr Wälzteile vorgesehen werden, wenn dieses erforderlich oder sinnvoll erscheint. In Figur 2 ist ein Wälzlagereinheit 8 in Seitenansicht dargestellt. Die seitliche Begrenzung der Laufbahn 11 verhindert ein seitliches "Abwandern" der oberen Lagerschale gegenüber der unteren während des Schwingens bzw. ein seitliches Herausrutschen der Rollen.

Das in Figur 3 dargestellte zweite Ausführungsbeispiel arbeitet im Prinzip wie das erste Ausführungsbeispiel. Im Unterschied zu diesem handelt es sich hier um einen rotatorischen Schwingförderer, bei dem das Werkstück auf einer Kreisbahn 12 wandert, die meist in Form einer Förderwendel schraubenförmig ansteigt. Die Nutzmasse 1' ist ebenfalls durch Blattfedern 2' mit der Gegenmasse 3' verbunden. Die Antriebsmittel sind bei diesem zweiten Ausführungsbeispiel nicht mehr dargestellt. Zwischen der Gegenmasse 3' und dem Aufstellgrund 7', sind hier eine ganze Anzahl von Wälzlagereinheiten 8' vorgesehen, die gleichmäßig an der Peripherie der Gegenmasse 3' unter dieser angeordnet sind.

In Figur 4 ist eine derartige Wälzlagereinheit 8' in vergrößertem Maßstab dargestellt. Zwischen den Lagerschalen 14 ist als Wälzteil 15 eine Kegelrolle angeordnet. Auch hier wird durch seitliche Begrenzungen der Laufbahn 11' erreicht, daß die Kegelrolle ihren Arbeitsbereich beibehält. Die Wälzlagereinheiten sind bei beiden Ausführungsbeispielen lediglich prinzipiell dargestellt, wobei es eine ganze Reihe konstruktiver Möglichkeiten gibt, eine Verbindung zwischen den beiden Lagerschalen beispielsweise für den Transport herzustellen.

Die beschriebene Dämpfungs- bzw. Isolationsvorrichtung ist auch nicht eingeschränkt auf die dargestellten Schwingförderbeispiele, sondern ist überall dort einsetzbar, wo vergleichbare Probleme der Schwingungsdämpfung und/oder Isolation bestehen.

**Patentansprüche**

1. Schwingförderer mit einer eine Förderfläche (5) für das zu fördernde Werkstück (6,6') aufweisenden Nutzmasse (1, 1'), einer mit der Nutzmasse (1) über Federn (2, 2') bzw. andere Lenker und Speicherelemente der Schwingungsenergie verbundene, als Grundkörper dienende Gegenmasse (3, 3'), einem an der Nutzmasse (1, 1') und an der Gegenmasse (3, 3') angreifenden Schwingantrieb (4) und einer Einrichtung zwischen Gegenmasse (3, 3') und Aufstellgrund (7, 7') zur Schwingungsisolation und/oder Dämpfung, dadurch gekennzeichnet, daß die Gegenmasse (3, 3,) über Wälzlagereinheiten (6, 8') am Aufstellgrund (7, 7') abgestützt ist, welche je aus zwei Lagerschalen (9, 14) und mindestens einem Wälzteil (Kugel 10, Rolle 15) bestehen, dessen Freilauf auf einen engen Bereich um einen Gleichgewichtspunkt durch horizontal wirkende Kräfte eingeschränkt ist, welche mit zunehmender Entfernung des Wälzteils (10, 15) vom Gleichgewichtspunkt zunehmen.

2. Schwingförderer nach Anspruch 1, dadurch gekennzeichnet, daß bei mindestens einer Lagerschale (9, 14) einer Wälzlagereinheit (8, 8') die Laufbahn (11) vor und/oder nach dem Wälzteil (10, 15) sich der anderen gegenüberliegenden Laufbahn (11) in Form einer vorgegebenen Kurve zuneigt.

3. Schwingförderer nach Anspruch 2, dadurch gekennzeichnet, daß die Kurve mit zunehemendem verlauf steiler wird.

4. Schwingförderer nach Anspruch 2 oder 3, dadurch gekennzeichnet, daß in einer Wälzlagereinheit (8, 8') zwei Wälzteile (10) vorgesehen sind, zwischen denen die Laufbahn (11) jeweils eine der anderen gegenüberliegenden Laufbahn (11) zugeneigte Erhebung (13, 13') aufweist.

5. Schwingförderer nach einem der vorhergehenden Ansprüche, dadurch gekennzeichnet, daß Lagerschalen (9, 14), Laufbahnen (11) und/oder Wälzteile (10, 15) aus elastischem Material bestehen.

6. Schwingförderer nach Anspruch 5, dadurch gekennzeichnet, daß als elastisches Material Gummi und/oder Kunststoff dient.

## Claims

1. Vibratory conveyor having a useful mass (1, 1')' featuring a conveying surface (5) for the work piece (6, 6') to be conveyed, a counter mass (3, 3'), connected to the useful mass (1) via springs (2, 2') or other guides and storage elements of the vibration energy and acting as a base body, a vibratory drive (4), engaging on the useful mass (1, 1') and on the counter mass (3, 3'), and a device between the counter mass (3, 3') and the erecting base (7, 7') for vibration insulation and/or damping, characterized in that the counter mass (3, 3') is supported on the erecting base (7, 7') via rolling-contact bearing units (8, 8'), each of which consists of two bearing shells (9, 14) and at least one rolling-contact part (ball 10, roller 15), the free running of which is restricted to a narrow range about a point of equilibrium by horizontally acting forces which increase with increasing distance of the rolling-contact part (10, 15) from the point of equilibrium.

2. Vibratory conveyor according to Claim 1, characterized in that, in at least one bearing shell (9, 14) of a rolling-contact bearing unit (8, 8'), the raceway (11), in front of and/or after the rolling-contact part (10, 15), is inclined towards the other opposite raceway (11) in the form of a predetermined curve.

3. Vibratory conveyor according to Claim 2, characterized in that the curve becomes steeper as it progresses.

4. Vibratory conveyor according to Claim 2 or 3, characterized in that two rolling-contact parts (10) are provided in a rolling-contact bearing unit (8, 8'), between which rolling-contact parts (10) the raceway (11) has in each case an elevation (13, 13') inclined towards the other, opposite raceway (11).

5. Vibratory conveyor according to one of the preceding claims, characterized in that the bearing shells (9, 14), the raceways (11) and/or the rolling-contact parts (10, 15) are made of an elastic material.

6. Vibratory conveyor according to Claim 5, characterized in that rubber and/or plastic is used as the elastic material.

## Revendications

1. Transporteur vibrant comportant une masse utile (1, 1') qui présente une surface de transport (5) pour la pièce (6, 6') à transporter, une contre-masse (3, 3') servant de corps de base et reliée à la masse utile (1) par l'intermédiaire de ressorts (2, 2') ou autres supports oscillants et éléments accumulateurs de l'énergie de vibration, comportant aussi un mécanisme d'entraînement en vibration qui attaque la masse utile (1, 1') et la contre-masse (3, 3'), ainsi qu'un dispositif, entre la contre-masse (3, 3') et le plancher de montage (7, 7') pour l'isolation aux vibrations et/ou l'amortissement, transporteur caractérisé en ce que la contre-masse (3, 3') s'appuie sur le plancher de montage (7, 7') par l'intermédiaire d'éléments de palier à pièces de roulement (8, 8') respectivement constituées de deux coques de palier (9, 14) et d'au moins une pièce de roulement (bille 10, rouleau 15) dont la course libre est limitée à une zone étroite autour d'un point d'équilibre par des forces qui agissent horizontalement et qui s'accroîssent à mesure que s'accroît la distance entre la pièce de roulement (10, 15) et le point d'équilibre.

2. Transporteur vibrant selon la revendication 1, caractérisé en ce que, dans le cas d'au moins une coque (9, 14) d'un élément de palier à pièces de roulement (8, 8'), la piste de roulement (11) s'incline, en forme de courbe prescrite, avant et/ou après la pièce de roulement (10, 15), en direction de l'autre piste de roulement (11) située en face.

3. Transporteur vibrant selon la revendication 2, caractérisé en ce que la courbe présente une pente croissante.

4. Transporteur vibrant selon la revendication 2 ou 3, caractérisé en ce que, dans un élément de palier à pièces de roulement (8, 8') sont prévues deux pièces de roulement (10) entre lesquelles la piste de roulement (11) présente respectivement une éminence (13, 13') inclinée vers l'autre piste de roulement (11) située en face.

5. Transporteur vibrant selon l'une des revendications précédentes, caractérisé en ce que les coques (9, 14), les pistes de roulement (11) et/ou les pièces de roulement (10, 15) sont en matériau élastique.

6. Transporteur vibrant selon la revendication 5, caractérisé en ce que comme matériau élastique on utilise du caoutchouc et/ou du plastique.

*Fig.1*

*Fig.2*

*Fig.3*

*Fig.4*